# EUROPEAN PATENT APPLICATION

(11) **EP 1 997 672 A2**
(43) Date of publication of application: **03.12.2008**
(21) Application number: 08152933.1
(22) Date of filing: 18.03.2008
(51) Int. Cl.: B60N 2/28

(54) **Child seat**

(30) Priority: 30.05.2007 JP 2007143689
(71) Applicant: TAKATA CORPORATION, Minato-ku, Tokyo 106-8510 (JP)
(72) Inventor: Sakumoto, Masayuki c/o Takata Corporation, Tokyo 106-8510 (JP); Yoshida, Junichi c/o Takata Corporation, Tokyo 106-8510 (JP)
(74) Representative: Vossius & Partner

(57) **Abstract**

To provide an ISO-FIX child seat in which right and left arms extremely smoothly advance and retreat in synchronization with each other.

A left side frame (26L) and a right side frame (26R) extending in the front-rear direction are respectively provided on left and right sides of a base body (21). A front end of a left arm (23L) is inserted in the left side frame (26) so as to be movable in the front-rear direction, and a front end of a right arm (23R) is inserted in the right side frame (26R) so as to be movable in the front-rear direction. The front ends of the arms (23L and 23R) are connected by a shaft (30). Racks (35L and 35R) extending in the front-rear direction are respectively provided on the side frames (26L and 26R).

Pinions (36L and 36R) meshed with the racks (35L and 35R) are respectively provided at the left and right ends of the shaft (30). The pinions (36L and 36R) corotate via the shaft (30).
An arm lock device configured to disable protrusion of the arms and unlock means configured ro release the lock by the lock device are provided therein.

## Description

The present invention relates to a child seat, and specifically, it relates to an ISO-FIX child seat. More specifically, the present invention relates to a child seat in which arms for ISO-FIX connection can protrude and recede.

An ISO-FIX child seat includes a base to be mounted on a seat cushion of a vehicle, and a child seat body detachably mounted on the base so that a child sits thereon. Arms project rearward from right and left sides of the base. By engaging hooks provided at the leading ends of the arms with clamp bars in the vehicle body, the base is connected to the vehicle body.

Japanese Unexamined Patent Application Publication Nos. 2002-293175 (D1) and 2002-293176 (D2) disclose a structure in which arms can retreat toward a base, the base is placed on a seat cushion and is connected to the vehicle body by an ISO-FIX method, a child seat body is mounted on the base, and the arms are then moved back into the base until the child seat body comes into contact with a seat back.

These arms are slidably disposed in frames of C-shaped cross section, and are normally locked by a lock member. In order to advance and retreat the arms, a lever is operated to release the lock by the lock member.

In Patent Documents 1 and 2 described above, unclamping of the leading ends of the arms and releasing of the lock by the lock member are performed with a common lever. When the lever is operated, both an unclamping operation and an unlocking operation are performed. In this structure, it is impossible to unclamp the leading ends of the arms without performing unlocking.

The present invention provides a child seat which overcomes this inconvenience of the known art and in which the leading ends of arms can be unclamped without performing an unlocking operation.

A child seat according to the present invention (Claim 1) includes a base to be placed on a seat cushion of a vehicle, and a child seat body detachably mounted on the base so that a child sits thereon. Side frames extending in a front-rear direction are provided on left and right sides of the base. Arms are provided along the side frames so as to protrude rearward from the base. An arm lock device configured to disable protrusion of the arms and unlock means configured to release the lock by the lock device are provided. At the leading ends of the arms, engaging members to be engaged with clamp bars provided in a vehicle body, and disengaging means that disengage the engaging members are provided. The unlock means and the disengaging means are operated with a common operating member. The disengaging means performs a disengaging operation when the operating member is moved halfway in an operating direction, and the unlock means performs an unlock operation when the operating member is moved further.

In the child seat according to the present invention, the disengaging means performs a disengaging operation when the operating member is moved halfway in the operating direction, and the unlock means performs an unlock operation when the operating member is moved further. Therefore, only unclamping of the leading ends of the arms can be achieved without performing the unlock operation.

An embodiment will be described below with reference to the drawings.
[Fig. 1] Fig. 1 is a perspective view showing a base of a child seat according to an embodiment and a vehicle seat.
[Fig. 2] Fig. 2 includes cross-sectional views showing an engaging mechanism for an arm of the base and a clamp bar of the seat.
[Fig. 3] Fig. 3 includes side views showing states in which the base is mounted on a seat cushion.
[Fig. 4] Fig. 4 is an exploded view (side view) of the base and a child seat body.
[Fig. 5] Fig. 5 is a see-through perspective view of the base.
[Fig. 6] Fig. 6 is a see-through top view of the base.
[Fig. 7] Fig. 7 is a cross-sectional view taken along line VII-VII in Fig. 6.
[Fig. 8] Fig. 8 is a cross-sectional view taken along line VIII-VIII in Fig. 6.
[Fig. 9] Fig. 9 is a cross-sectional view of a portion similar to the portion shown in Fig. 8 when the arm is moved rearward toward the base.
[Fig. 10] Fig. 10 is a cross-sectional view of the portion similar to the portion shown in Fig. 8 when the arm is disengaged from the clamp bar.
[Fig. 11] Fig. 11 is a cross-sectional view of the portion similar to the portion shown in Fig. 8 when the arm is unlocked.
[Fig. 12] Fig. 12 includes cross-sectional views taken along lines XIIa-XIIa and XIIb-XIIb in Fig. 6.
[Fig. 13] Fig. 13 includes cross-sectional views of portions similar to the portions shown in Fig. 12 when the arm is disengaged from the clamp bar.
[Fig. 14] Fig. 14 includes cross-sectional views of the portions similar to the portions shown in Fig. 12 when the arm is unlocked.

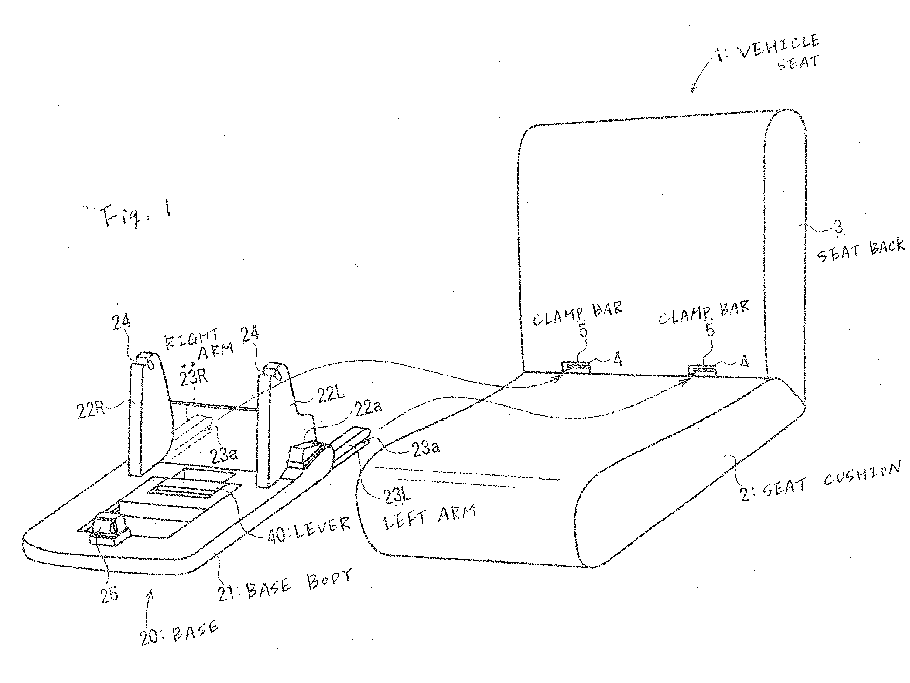

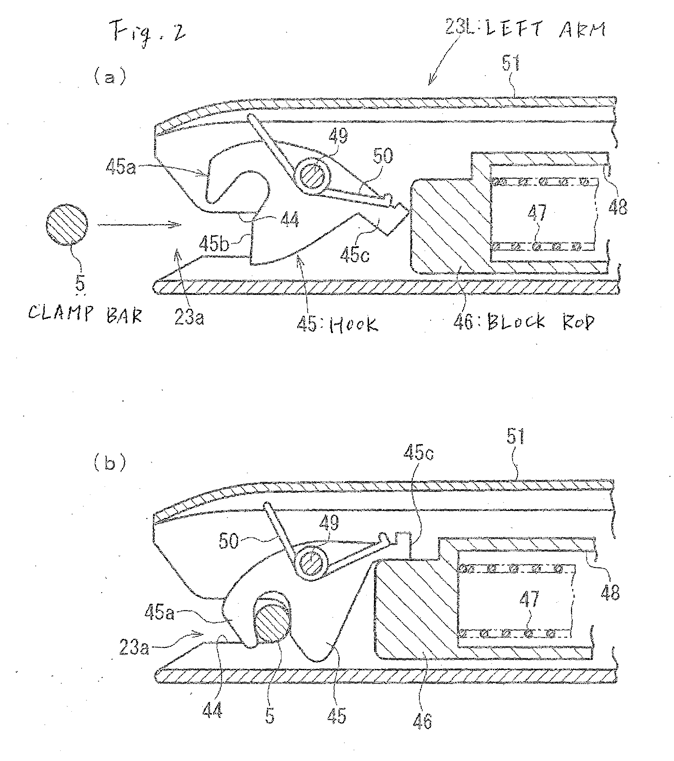

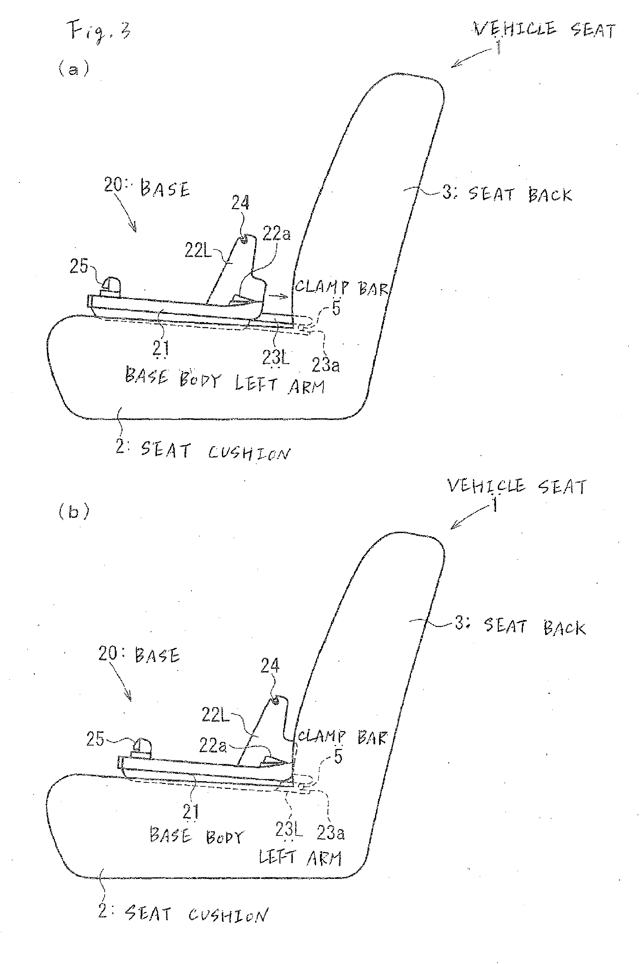

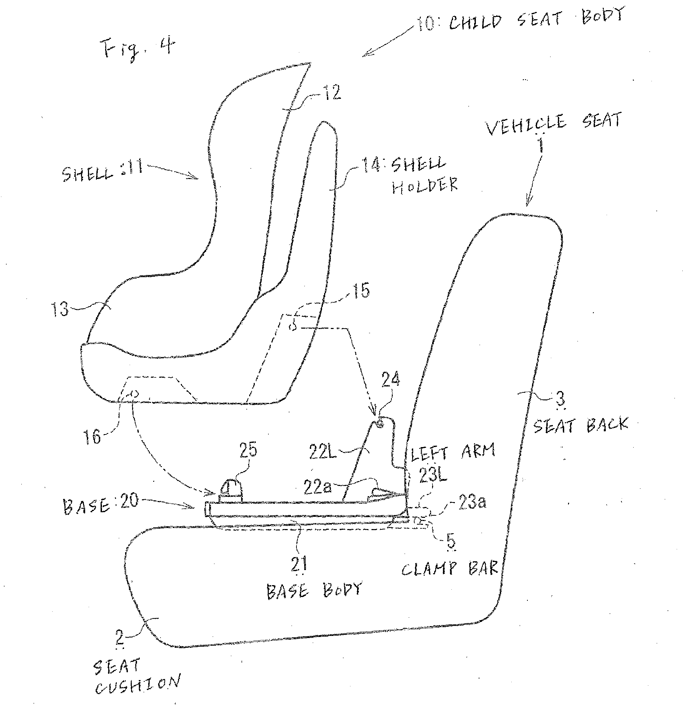

Fig. 1 is a perspective view showing a base of a child seat according to an embodiment and a vehicle seat, Fig. 2 includes cross-sectional views showing an engaging mechanism for an arm of the base and a clamp bar of the seat, Fig. 3 includes side views showing states in which the base is mounted on a seat cushion, and Fig. 4 is an exploded view (side view) of the base and a child seat body. Fig. 2(a) shows a state in which the arm and the clamp bar are not engaged, and Fig. 2(b) shows a state in which the arm and the clamp bar are engaged. Fig. 3(a) shows a state before the base is pressed against a seat back, and Fig. 3(b) shows a state after the base is pressed against the seat back.

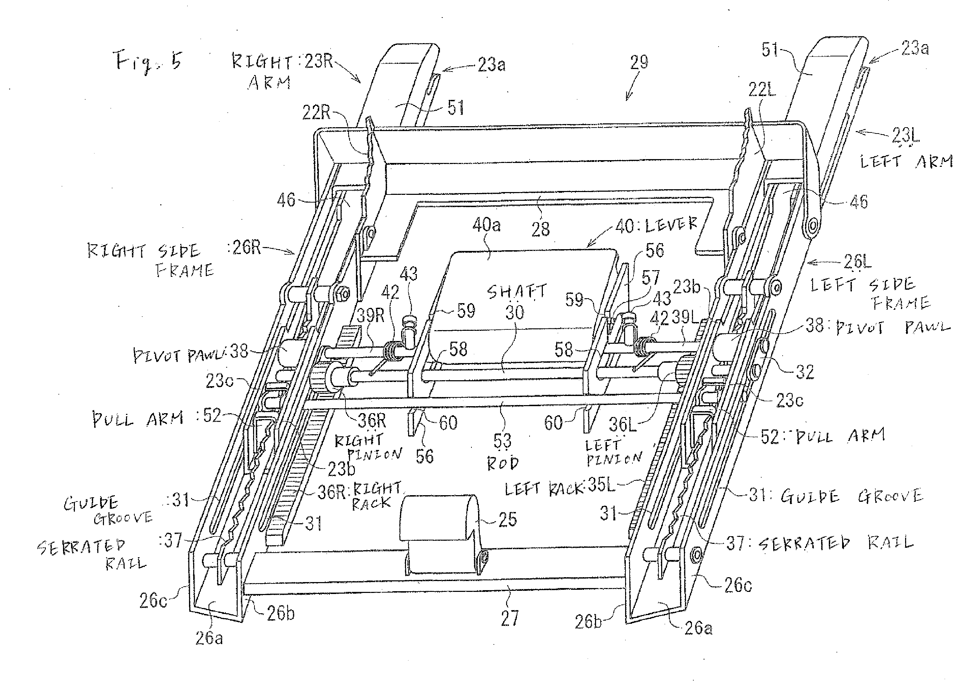

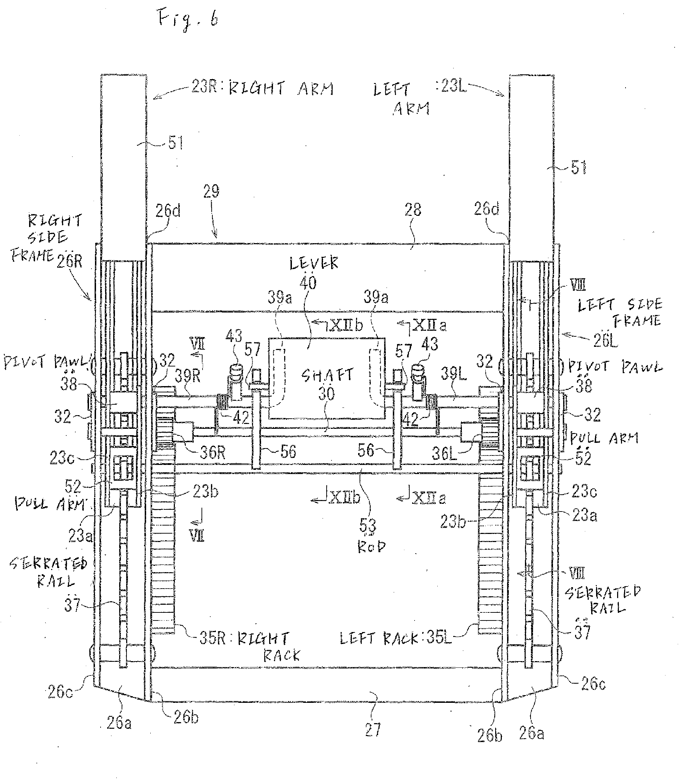

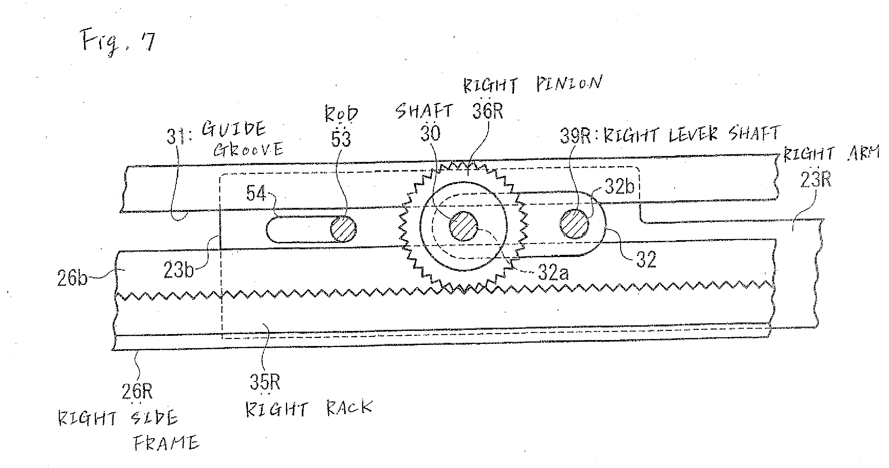

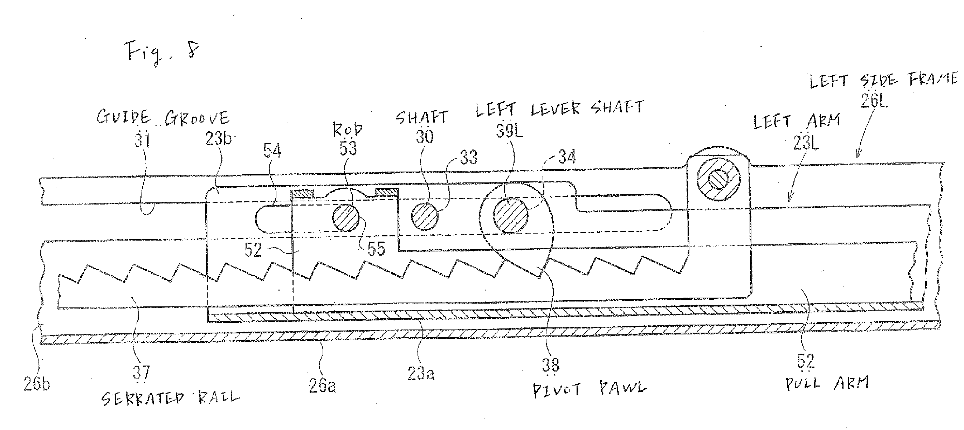

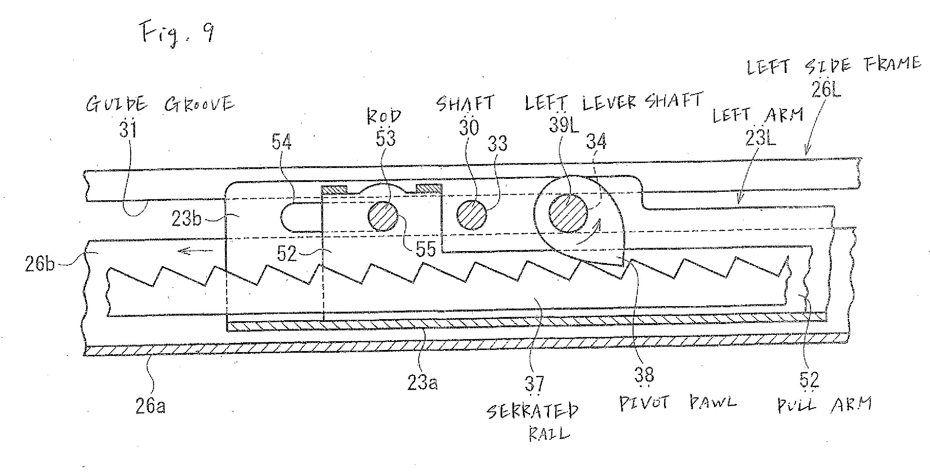

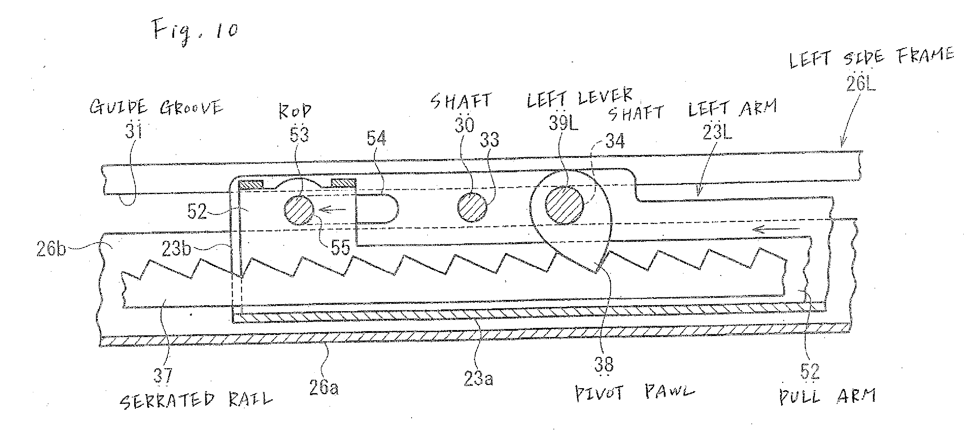

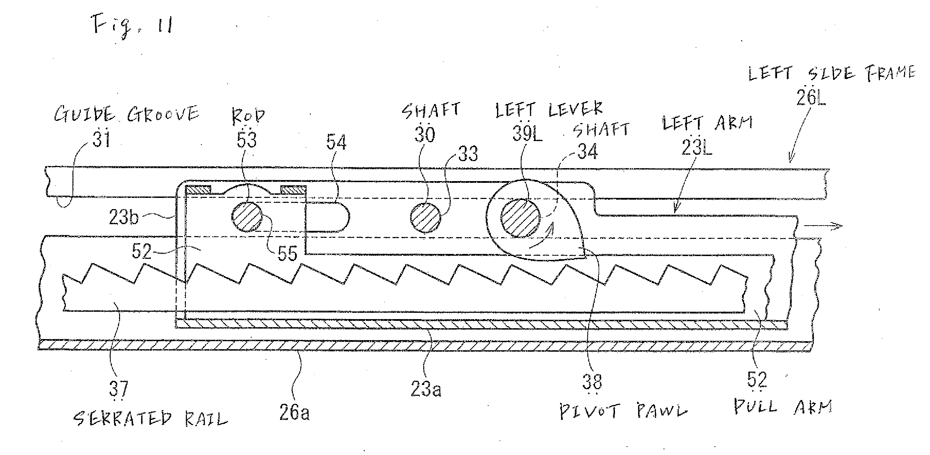

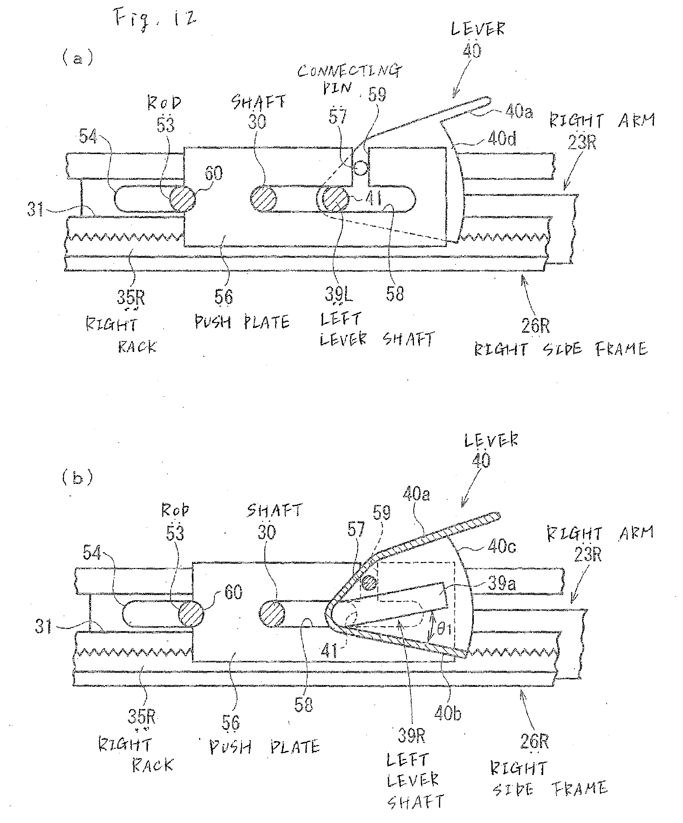

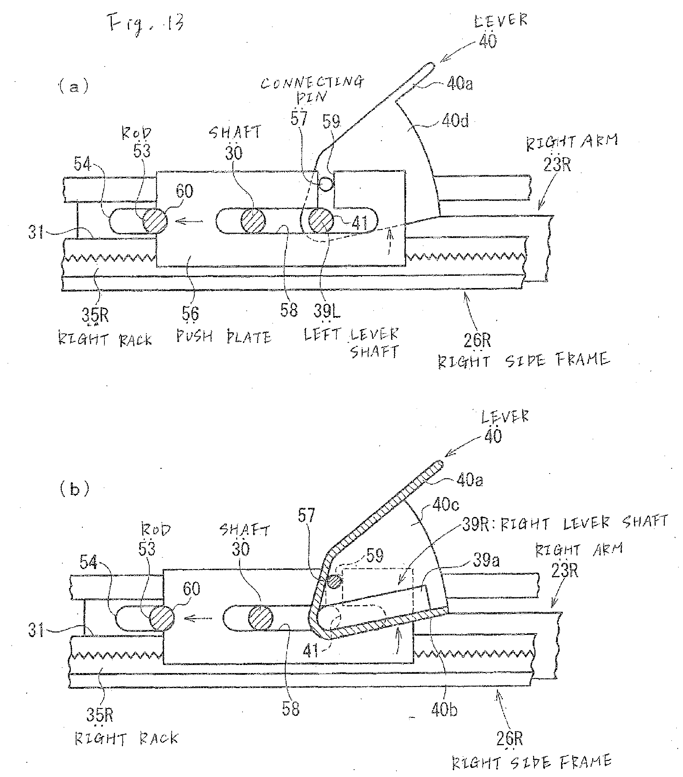

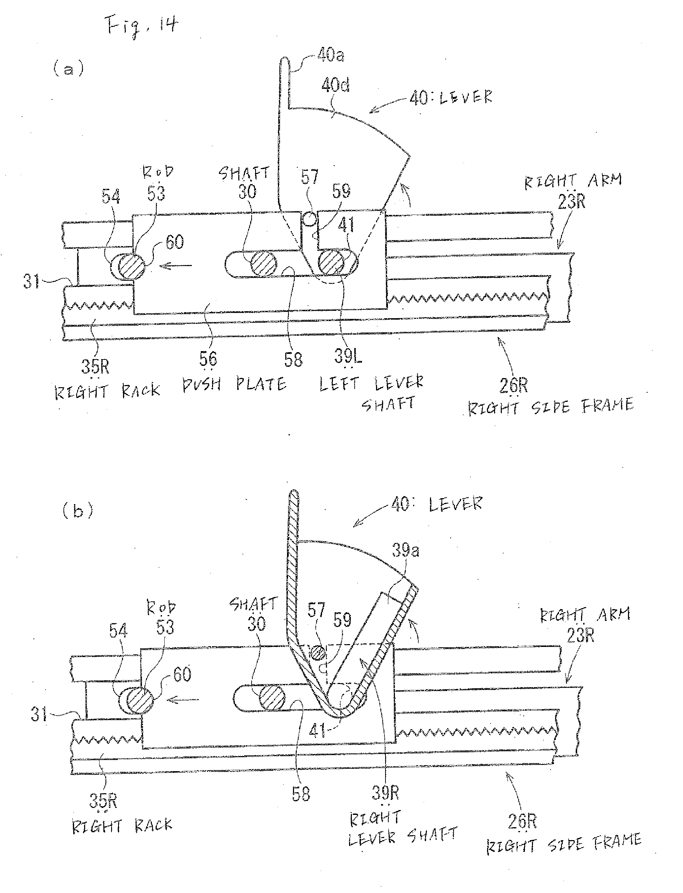

Fig. 5 is a see-through perspective view of the base, Fig. 6 is a see-through top view of the base, Fig. 7 is a cross-sectional view taken along line VII-VII in Fig. 6, and Fig. 8 is a cross-sectional view taken along line VIII-VIII in Fig. 6. Fig. 9 is a cross-sectional view of a portion similar to the portion shown in Fig. 8 when the arm is retreated toward the base, Fig. 10 is a cross-sectional view of the portion similar to the portion shown in Fig. 8 when the arm is disengaged from the clamp bar, and Fig. 11 is a cross-sectional view of the portion similar to the portion shown in Fig. 8 when the arm is unlocked. Fig. 12(a) is a cross-sectional view taken along line XIIa-XIIa in Fig. 6, and Fig. 12(b) is a cross-sectional view taken along line XIIb-XIIb in Fig. 6. Figs. 13(a) and 13(b) are cross-sectional views of portions similar to the portions shown in Figs. 12(a) and 12(b) when the arm is disengaged from the clamp bar, and Figs. 14(a) and 14(b) are cross-sectional views of the portions similar to the portions shown in Figs. 12(a) and 12(b) when the arm is unlocked.

In the following description, the front-rear direction and right-left direction coincide with the front-rear direction and right-left direction for a person sitting on the vehicle seat on which the child seat is mounted.

As shown in Fig. 1, a vehicle seat 1 includes a seat cushion 2 and a seat back 3. In this embodiment, a pair of arm insertion openings 4, in which a left arm 23L and a right arm 23R of a base 20 that will be described below are inserted, are provided at the bottom end of a front surface of the seat back 3. A clamp bar 5 serving as an anchor for ISO-FIX child seat connection is provided in each of the arm insertion openings 4. Each clamp bar 5 extends such as to cross the inside of the arm insertion opening 4 in the right-left direction.

As shown in Fig. 4, a child seat includes a child seat body 10, and a base 20 to which the child seat body 10 is connected. The child seat body 10 includes a shell 11 having a back portion 12 and a seat portion 13, and a shell holder 14 that supports the shell 11 so that the shell 11 can recline. Reference numeral 15 denotes bars to be engaged with child-seat-body retaining hook mechanisms 24 of side towers 22L and 22R in the base 20 that will be described below, and reference numeral 16 denotes a bar to be engaged with a child-seat-body lock mechanism 25 in the base 20 that will be described below.

As shown in Figs. 1 and 3, the base 20 includes a plate-shaped base body 21 to be placed on the seat cushion 2 of the vehicle seat 1, side towers 22L and 22R respectively standing upward from left and right sides of the base body 21, ISO-FIX arms 23L and 23R respectively extending rearward from left and right ends of a rear surface of the base body 21, child-seat-body retaining hook mechanisms 24 provided at upper ends of the side towers 22L and 22R, and a child-seat-body lock mechanism 25 provided at the front of an upper surface of the base body 21. Engaging portions 23a to be engaged with the clamp bars 5 of the vehicle seat 1 are provided at rear ends of the arms 23L and 23R. The structure of the engaging portions 23a will be described in detail below.

As shown in Figs. 5 and 6, a left side frame 26L and a right side frame 26R extending in the front-rear direction are respectively provided on left and right sides of the base body 21.

In this embodiment, each of the side frames 26L and 26R includes a bottom plate 26a and a pair of side walls 26b and 26c standing from right and left side edges of the bottom plate 26a, and is angularly U-shaped in cross section such as to be open at the top. The side frames 26L and 26R are also open at front and rear end faces, and rear-end openings of the side frames 26L and 26R serve as arm insertion openings 26d (Fig. 6) through which the arms are inserted in the side frames 26L and 26R.

These side frames 26L and 26R are disposed parallel to each other. Front ends thereof are connected by a front frame 27, and rear ends thereof are connected by a rear frame 28.

The side towers 22L and 22R respectively stand upward near intersections of the rear ends of the side frames 26L and 26R and the left and right ends of the rear frame 28.

The side frames 26L and 26R, the front frame 27, and the rear frame 28 define a rectangular base frame 29, and the base frame 29 is covered with a case (not shown) that constitutes an outer shell of the base 21. At the left and right ends of a rear surface of the case, openings (not shown) communicating with the arm insertion openings 26d at the rear ends of the side frames 26L and 26R are provided.

Through the openings in the rear surface of the case and the arm insertion openings 26d at the rear ends of the side frames 26L and 26R, the front end of the left arm 23L is inserted in the left side frame 26L so as to be movable in the front-rear direction, and the front end of the right arm 23R is inserted in the right side frame 26R so as to be movable in the front-rear direction.

In this embodiment, each of the arms 23L and 23R also includes a bottom plate 23a and a pair of side walls 23b and 23c standing from left and right side edges of the bottom plate 23a, and is angularly U-shaped in cross section such as to be open at the top.

Front ends of the arms 23L and 23R are connected by a shaft 30 extending in the right-left direction. The shaft 30 extends in a direction orthogonal to the extending direction of the side frames 26L and 26R.

As shown in Fig. 5, each of the side walls 26b and 26c of the side frames 26L and 26R has a guide groove 31 extending in the front-rear direction.

In each guide groove 31, a sliding spacer 32 capable of moving in the front-rear direction along the guide groove 31 is provided in this embodiment. As shown in Fig. 7, the sliding spacer 32 includes a shaft insertion hole 32a in which the shaft 30 is inserted, and a lever-shaft insertion hole 32b in which a lever shaft 39L or 39R that will be described below is inserted. The shaft insertion hole 32a and the lever-shaft insertion hole 32b are provided at different positions in the front-rear direction. The shaft insertion hole 32a rotatably holds the shaft 30, and the lever-shaft insertion hole 32b rotatably holds the lever shaft 39L or 39R. In this embodiment, the shaft insertion hole 32a is provided at the front end of the sliding spacer 32, and the lever-shaft insertion hole 32b is provided at the rear end of the sliding spacer 32.

At the front end of each of the side walls 23b and 23c of the arms 23L and 23R, a shaft insertion hole 33 in which the shaft 30 is inserted, and a lever-shaft insertion hole 34 in which the lever shaft 39L or 39R is inserted are provided. The shaft insertion hole 33 and the lever-shaft insertion hole 34 also rotatably hold the shaft 30 and the lever shaft 39L or 39R.

The shaft insertion holes 33 of the side walls 23b and 23c oppose in a coaxial manner, and the lever-shaft insertion holes 34 of the side walls 23b and 23c oppose in a coaxial manner. Further, the shaft insertion holes 33 and the levers-shaft insertion holes 34 of the side walls 23b and 23c are positioned so as to be aligned with the shaft insertion holes 32a and the lever-shaft insertion holes 32b of the sliding spacers 32 provided in the guide grooves 31.

The left end of the shaft 30 is inserted in order into the shaft insertion hole 32a of the sliding spacer 32 provided in the right guide grove 31 of the left side frame 26L and the shaft insertion hole 32a of the sliding spacer 32 provided in the left guide groove 31 of the left side frame 26L so as to extend in the right-left direction through the left side frame 26L and the left arm 23L disposed therein.

The right end of the shaft 30 is inserted in order into the shaft insertion hole 32a of the sliding spacer 32 provided in the left guide grove 31 of the right side frame 26R and the shaft insertion hole 32a of the sliding spacer 32 provided in the right guide groove 31 of the right side frame 26R so as to extend in the right-left direction through the right side frame 26R and the right arm 23R disposed therein.

As shown in Figs. 5 to 7, in this embodiment, racks 35L and 35R extending in the front-rear direction are respectively provided on the right side wall 26b of the left side frame 26L and the left side wall 26b of the right side frame 26R. As shown in Fig. 6, in this embodiment, the racks 35L and 35R are attached to surfaces of the side walls 26b and 26b opposing each other (surfaces pointing toward the center of the base 21). As shown in Fig. 7, the racks 35L and 35R extend along lower edges of the guide grooves 31.

At the left and right ends of the shaft 30, pinions 36L and 36R are respectively provided so as to roll on the racks 35L and 35R while being meshed with the left and right racks 35L and 35R. The shaft 30 and the left and right pinions 36L and 36R are arranged coaxially. The pinions 36L and 36R are fixed to the shaft 30, and corotate via the shaft 30.

Since the pinions 36L and 36R corotate via the shaft 30 in this way, for example, when the left arm 23L attempts to advance or retreat, the right arm 23R also attempts to advance or retreat in synchronization with the left arm 23L via the pinions 36L and 36R and the shaft 30. As a result, the left and right arms 23L and 23R always advance and retreat together.

A serrated rail 37 extending in the front-rear direction is provided in each of the side frames 26L and 26R. As shown in Fig. 8, rear ends of the serrated rails 37 respectively extend into the arms 23L and 23R. The serrated rails 37 are disposed at a distance from upper surfaces of the bottom plates 26a of the side frames 26L and 26R. The bottom plates 23a of the arms 23L and 23R can translate in the front-rear direction between the bottom plates 26a of the side frames 26L and 26R and the serrated rails 37.

In this embodiment, teeth of the serrated rails 37 are shaped like triangular waves in which inclined faces on the front sides of the apexes are steeper than inclined faces on the rear sides of the apexes, as shown in Figs. 8 to 11.

Pivot pawls 38 meshed with the serrated rails 37 are provided in the arms 23L and 23R. The pivot pawls 38 are respectively held by lever shafts 39L and 39R extending in the right-left direction so as to pivot in the up-down direction relative to the arms 23L and 23R.

In a state in which the pivot pawls 38 are meshed between the teeth of the serrated rails 37, as shown in Fig. 8, even when an attempt is made to move the arms 23L and 23R rearward, the pivot pawls 38 are caught by the front inclined faces of the teeth disposed on the rear sides of the pivot pawls 38, and rearward movement of the arms 23L and 23R is prevented. When the pivot pawls 38 are turned upward via the lever shafts 39L and 39R, they come out from between the teeth of the serrated rails 37, and this permits rearward movement of the arms 23L and 23R, as shown in Fig. 11. When the arms 23L and 23R are moved forward, the pivot pawls 38 are turned upward while sliding along the rear inclined faces of the teeth disposed on the front sides of the pivot pawls 38, and come out from between the teeth of the serrated rails 37, as shown in Fig. 9. Consequently, forward movement of the arms 23L and 23R is always permitted.

That is, in this embodiment, the serrated rail 37 and the pivot pawl 38 constitute an arm lock device that disables protrusion of the arms 23L and 23R.

A left end of the left lever shaft 39L is inserted in the lever-shaft insertion hole 32b of the sliding spacer 32 provided in the right guide groove 31 of the left side frame 26L and the lever-shaft insertion hole 34 of the right side wall 23b of the left arm 23L, is extended in the left-right direction through the pivot pawl 38 in the left arm 23L, and is then inserted into the lever-shaft insertion hole 34 of the left side wall 23c of the left arm 23L and the lever-shaft insertion hole 32b of the sliding spacer 32 provided in the left guide groove 31 of the left side frame 26L.

A right end of the right lever shaft 39R is inserted in the lever-shaft insertion hole 32b of the sliding spacer 32 provided in the left guide groove 31 of the right side frame 26R and the lever-shaft insertion hole 34 of the right side wall 23b of the right arm 23R, is extended in the right-left direction through the pivot pawl 38 in the right arm 23R, and is then inserted into the lever-shaft insertion hole 34 of the right side wall 23c of the right arm 23R and the lever-shaft insertion hole 32b of the sliding spacer 32 provided in the right guide groove 31 of the right side frame 26R.

The pivot pawl 38 of the left arm 23L is fixed to the left lever shaft 39L so as to corotate with the left lever shaft 39L. The pivot pawl 38 of the right arm 23R is fixed to the right lever shaft 39R so as to corotate with the right lever shaft 39R.

In this embodiment, the lever shafts 39L and 39R serve as unlock means that releases the lock by the arm lock device constituted by the serrated rails 37 and the pivot pawls 38.

These lever shafts 39L and 39R are coaxially arranged substantially parallel to the shaft 30.

A lever 40 for operating the pivot pawls 38 is provided near the center of the base 21 in the right-left direction.

In this embodiment, the lever 40 is shaped like a box including a top plate 40a that forms an upper surface, a bottom plate 40b that forms a bottom surface, and side plates 40c and 40d that form left and right side faces. As shown in Fig. 12(b), the distance between the top plate 40a and the bottom plate 40b decreases toward the front side, and the front ends thereof are connected. That is, in this embodiment, the lever 40 is substantially fan-shaped in cross section. The space between the rear ends of the top plate 40a and the bottom plate 40b is opened toward the rear side.

A lever-shaft insertion hole 41 (Fig. 12(b)) in which the lever shaft 39L or 39R is inserted is provided near a corner portion of each of the left and right side plats 40c and 40d intersecting the front ends of the top plate 40a and the bottom plate 40b (near a portion corresponding to the rivet of the above-described fan). The lever-shaft insertion hole 41 of the left side plate 40c and the lever-shaft insertion hole 41 of the right side plate 40d oppose each other coaxially.

A right end of the left lever shaft 39L is inserted in the lever 40 through the lever-shaft insertion hole 41 of the left side plate 40c. A left end of the right lever shaft 39R is inserted in the lever 40 through the lever-shaft insertion hole 41 of the right side plate 40d. The lever 40 is supported by the lever shafts 39L and 39R so as to pivot in the up-down direction.

As shown in Fig. 6, the right end of the left lever shaft 39L and the left end of the right lever shaft 39R are bent rearward in an L-shape along the inner surfaces of the left and right side plates 40c and 40d inside the lever 40. Hereinafter, these portions of the lever shafts 39L and 39R bent rearward will be referred to as rearward extending portions 39a.

In a state in which the lever 40 is placed at the downward pivot limit, as shown in Fig. 12(b), the rearward extending portions 39a of the lever shafts 39L and 39R are disposed at positions shifted upward from the upper surface of the bottom plate 40b of the lever 40 by a predetermined angle θ₁ about the axes of the lever shafts 39L and 39R. That is, until the lever 40 is pivoted upward by the predetermined angle θ₁, the bottom plate 40b of the lever 40 does not come into contact with the rearward extending portions 39a of the lever shafts 39L and 39R.

By pivoting the lever 40 upward by the predetermined angle θ₁ or more, the bottom plate 40b of the lever 40 comes into contact with the rearward extending portions 39a of the lever shafts 39L and 39R, and the lever shafts 39L and 39R pivot upward together with the lever 40 via the rearward extending portions 39a.

As shown in Figs. 5 and 6, in this embodiment, a coil spring 42 is fitted on a middle portion of each of the lever shafts 39L and 39R in the extending direction. Adjacent to the coil spring 42, a projecting shaft 43 projects from each lever shaft 39L or 39R, and extends rearward. One end of the coil spring 42 is retained by the projecting shaft 43. The other end of the coil spring 42 is retained by the shaft 30 provided on the front side of the lever shaft 39L or 39R.

The lever 40 also includes a spring (not shown) that biases the lever 40 downward.

The structure of the engaging portions 23a at the rear ends of the arms 23L and 23R will now be described. While only the left arm 23L is shown in Figs. 2(a) and 2(b), the left arm 23L and the right arm 23R have the same structure.

As shown in Figs. 2(a) and 2(b), recesses 44 for receiving the above-described clamp bars 5 are provided at the rear ends of the left and right side walls 23b and 23c in each of the arms 23L and 23R (only the side wall 23b of the left arm 23L is shown in Figs. 2(a) and 2(b)). A hook 45 for gripping the clamp bar 5 put in the recesses 44 is provided between the side walls 23b and 23d.

A block rod 46 for preventing each hook 45 from retreating in the grip release direction is provided in each of the arms 23L and 23R. The block rod 46 is movable in the front-rear direction inside each arm 23L or 23R, and is biased rearward (leftward in Figs. 2(a) and 2(b)) by a spring 47. Reference numeral 48 denotes a spring accommodating portion of the block rod 46.

The hook 45 can pivot about a shaft 49 in the up-down direction, and a claw portion 45a at the leading end thereof is biased by a spring 50 in a direction away from the clamp bar 5 (upward in Figs. 2(a) and 2(b)). When the clamp bar 5 enters the recess 44, it comes into contact with a contact face 45b of the hook 45. Then, the clamp bar 5 further enters the recess 44 while depressing the claw portion 45a of the hook 45. When the clamp bar 5 further enters behind the claw portion 45a, the claw portion 45a is pressed down against the biasing force of the spring 50, and engages with the rear side of the clamp bar 5. Consequently, a latch state in which the clamp bar 5 is gripped is brought about, as shown in Fig. 2(b)

That is, in this embodiment, the hook 45 serves as an engaging member to be engaged with the clamp bar 5.

When the clamp bar 5 enters behind the claw portion 45a, a rear portion 45c of the hook 45 moves up, and the leading end of the block rod 46 comes under the rear portion 45c, as shown in Fig. 2(b). Pivotal movement of the hook 45 in the grip release direction (clockwise in Fig. 2(b)) is thereby prevented, so that the clamp bar 5 is continuously gripped by the hook 45.

Reference numeral 51 denotes a cover that covers the rear end of each arm 23L or 23R from above.

A pull arm 52 with which the block rod 46 is pulled forward extends forward from the rear end of the block rod 46. The pull arm 52 extends to the adjacency of the front end of the arm 23L or 23R.

The front ends of the pull arms 52 of the left and right arms 23L and 23R are connected by a rod 53.

Rod guide grooves 54 extending in the front-rear direction are provided in the side walls 23b and 23c of the arms 23L and 23R. As shown in Fig. 8, the rod guide grooves 54 are disposed closer to the front ends of the arms 23L and 23R than the shaft insertion holes 33. The rod guide grooves 54 are aligned with the left and right guide grooves 31 of the side frames 26L and 26R.

Rod insertion holes 55 (Fig. 8) in which the rod 53 is inserted are provided at the front ends of the pull arms 52 in a positional relationship such as to be aligned with the rod guide grooves 54.

The rod 53 extends substantially parallel to the shaft 30 on the front side of the shaft 30.

A left end of the rod 53 is inserted in the right guide groove 31 of the left side frame 26L and the rod guide groove 54 of the right side wall 23b of the left arm 23L, is inserted in the rod insertion hole 55 of the pull arm 52 in the left arm 23L, and is then inserted in the rod guide groove 54 of the left side wall 23c of the left arm 23L and the left guide groove 31 of the left side frame 26L.

A right end of the rod 53 is inserted in the left guide groove 31 of the right side frame 26R and the rod guide groove 54 of the left side wall 23b of the right arm 23R, is inserted in the rod insertion hole 55 of the pull arm 52 in the right arm 23R, and is then inserted in the rod guide groove 54 of the right side wall 23c of the right arm 23R and the right guide groove 31 of the right side frame 26R.

In a state in which the leading end of the block rod 46 is placed under the rear portion 45c of the hook 45, as shown in Fig. 2(b), the rod 53 is placed near the rear end of the rod guide groove 54.

Push plates 56 for pushing the rod 53 forward in cooperation with the upward pivotal movement of the lever 40 are provided on the right and left sides of the lever 40. Reference numeral 57 denotes connecting pins extending sideward from the left and right side plates 40c and 40d of the lever 40 for connection to the push plates 56.

Each push plate 56 is shaped like a band plate extending in the front-rear direction, as shown in Fig. 12(a). The push plate 56 has a shaft guide groove 58 extending in the front-rear direction. As shown in the figure, both the shaft 30 and the lever shaft 39L or 39R extend through the shaft guide groove 58. A connecting-pin guide groove 59 extends upward from a middle portion of the shaft guide groove 58 in the extending direction. The connecting pins 57 extending sideward from the side plates 40c and 40d of the lever 40 are engaged with the connecting-pin guide grooves 59 of the push plates 56. At the front edge of each push plate 56, a rod engaging portion 60 shaped like a cutout is provided so as to engage with the rod 53 from the rear side.

Although not shown in detail, a cover is mounted so as to cover the lever shafts 39L and 39R, the shaft 30, the rod 53, and the push plates 56 around the lever 40. The cover surrounds the front, left, and right sides of the lever 40. An upper surface and a rear opening of the lever 40 are exposed outside the cover. The push plates 56 move forward and rearward along guides provided in the cover.

In this embodiment, when the arms 23L and 23R move forward or rearward, the shaft 30, the lever shafts 39L and 39R, the lever 40, the rod 53, the push plates, and the cover covering these elements move forward or rearward together with the arms 23L and 23R.

When the lever 40 is pivoted upward from the state shown in Figs. 12(a) and 12(b) in which the lever 40 is placed at the downward pivot limit to the state shown in Figs. 13(a) and 13(b), the push plates 56 move forward in response to the pivotal movement of the lever 40 via the connecting pins 57, and push the rod 53 forward. Consequently, the pull arms 52 of the left and right arms 23L and 23R are pulled forward together, and the block rods 46 move forward. As a result, the block rods 46 are disengaged from the rear portions 45c of the hooks 45, and the hooks 45 are pivoted clockwise in Fig. 2(b) by the biasing force of the springs 50, and are brought from the state shown in Fig. 2(b) into the state shown in Fig. 2(a). Since the claw portions 45a of the hooks 45 are raised in the state shown in Fig. 2(a), the clamp bars 5 can disengage from the engaging portions 23a of the arms 23L and 23R.

That is, in this embodiment, the rod 53 and the pull arms 52 serve as disconnecting means that disengages the hooks 45 serving as the engaging members from the clamp bars 5.

Next, a procedure for installing the child seat having the above-described configuration will be described.

The child seat body 10 and the base 20 are separated beforehand. Further, the arms 23L and 23R of the base 20 are protruded rearward from the base body 21 to some extent or more. Normally, the arms 23L and 23R are protruded to the rearward protrusion limit.

Next, as shown in Figs. 1 and 3(a), the base 20 is placed on the seat cushion 2 of the vehicle seat 1, the left and right arms 23L and 23R are inserted into the arm insertion opening 4 at the lower end of the seat back 3, and the engaging portions 23a of the arms 23L and 23R are engaged with the clamp bars 5.

Subsequently, as shown in Figs. 3(a) and 3(b), the base body 21 is pushed rearward so as to bring the rear of the base body 21 into contact with the seat back 3. In this case, while forward movement of the arms 23L and 23R, that is, retreat toward the base body 21 is allowed by the serrated rails 37 and the pivot pawls 38, rearward movement, that is, protrusion from the base body 21 is prevented, as described above. Therefore, the base body 21 is continuously held in contact with the seat back 3.

After that, as shown in Fig. 4, the child seat body 10 is placed on the base 20, and the bars 15 of the child seat body 10 are engaged with the child-seat-body retaining hook mechanisms 24 of the left and right side towers 22L and 22R in the base 20. Moreover, the bar 16 of the child seat body 10 is engaged with the child-seat-body lock mechanism 25 provided at the front of the upper surface of the base 20. Consequently, the child seat body 10 is connected onto the base 20, and the use of the child seat is permitted.

In order to remove the child seat, first, child-seat-body unlock buttons 22a (Fig. 1) provided near the roots of the side towers 22L and 22R are pressed to disengage the child-seat-body retaining hook mechanisms 24 and the child-seat-body lock mechanism 25 from the bars 15 and 16. Then, the child seat body 10 is removed from the base 20.

Next, the lever 40 is pivoted upward from the state shown in Figs. 12(a) and 12(b) to the state shown in Figs. 13(a) and 13(b). As shown in Figs. 13(a) and 13(b), the push plates 56 thereby push the rod 53 rearward in cooperation with the movement of the lever 40, and the hooks 45 of the arms 23L and 23R are disengaged from the clamp bars 5, as described above. As a result, the base 20 is allowed to be removed from the vehicle seat 1.

In the state shown in Figs. 13(a) and 13(b) to which the lever 40 has been pivoted upward by the predetermined angle θ₁ from the state shown in Figs. 12(a) and 12(b), the bottom plate 40b of the lever 40 is not in contact with the rearward extending portions 39a of the lever shafts 39L and 39R, and the lever shafts 39L and 39R do not corotate with the lever 40. Therefore, the pivot pawls 38 of the arms 23L and 23R are continuously meshed with the serrated rails 37, and protrusion of the arms 23L and 23R from the base body 21 remains locked. That is, when the lever 40 is pivoted upward by the predetermined angle θ₁, only disengagement of the hooks 45 of the arms 23L and 23R from the clamp bars 5 is performed.

In order not only to disengage the hooks 45 of the arms 23L and 23R from the clamp bars 5, but also to protrude the arms 23L and 23R rearward, the lever 40 is further pivoted upward from the state shown in Figs. 13(a) and 13(b) to a state shown in Figs. 14(a) and 14(b). Thereby, the bottom plate 40b of the lever 40 is brought into contact with the rearward extending portions 39a of the lever shafts 39L and 39R, and the lever shafts 39L and 39R turn upward together with the lever 40. Consequently, the pivot pawls 38 of the arms 23L and 23R are pivoted upward to be disengaged from the serrated rails 37, as shown in Fig. 11, and rearward movement of the arms 23L and 23R is permitted. As a result, the arms 23L and 23R can be protruded rearward from the base body 21.

As described above, in this child seat, the hooks 45 of the arms 23L and 23R are disengaged from the clamp bars 5 by moving the lever 40 by the predetermined angle θ₁, and rearward protrusion of the arms 23L and 23R is unlocked by further pivoting the lever 40 upward. For this reason, only disengagement of the hooks 45 of the arms 23L and 23R and the clamp bars 5 can be performed without unlocking the rearward protrusion of the arms 23L and 23R.

In this child seat, the racks 35L and 35R are provided along the left and right side frames 26L and 26R of the base 20, and the pinions 36L and 36R are provided at both ends of the shaft 30 that connects the left and right arms 23L and 23R. These pinions 36L and 36R are respectively meshed with the racks 35L and 35R. The pinions 36L and 36R are interlocked by the shaft 30 so as to corotate with each other.

For this reason, for example, when the left arm 23L attempts to advance or retreat, the right arm 23 also attempts to advance or retreat in synchronization with the left arm 23L via the pinions 36L and 36R and the shaft 30. Therefore, the arms 23L and 23R always advance and retreat together. Accordingly, the side frames 26L and 26R are always positioned parallel to the arms 23L and 23R, and the arms 23L and 23R extremely smoothly advance and retreat along the side frames 26L and 26R.

The above-described embodiment is just an exemplary embodiment of the present invention, and the present invention is not limited to the above embodiment.

While disengagement of the hooks 45 of the arms 23L and 23R and the clamp bars 5 and unlocking of rearward protrusion of the arms 23L and 23R are performed by pivoting the lever 40 serving as the operating member upward in the above-described embodiment, they may be performed, for example, by sliding the lever 40 in the front-rear direction. In this case, for example, the hooks 45 of the arms 23L and 23R may be disengaged from the clamp bars 5 by sliding the lever 40 forward by a predetermined distance, and rearward protrusion of the arms 23L and 23R may be unlocked by further sliding the lever 40 forward.

## Claims

1. A child seat comprising:
a base to be placed on a seat cushion of a vehicle; and
a child seat body detachably mounted on the base so that a child sits thereon,
wherein side frames extending in a front-rear direction are provided on left and right sides of the base,
wherein arms are provided along the side frames so as to protrude rearward from the base,
wherein an arm lock device configured to disable protrusion of the arms and unlock means configured to release the lock by the lock device are provided,
wherein engaging members to be engaged with clamp bars provided in a vehicle body, and disengaging means configured to disengage the engaging members are provided at the leading ends of the arms,
wherein the unlock means and the disengaging means are operated with a common operating member, and
wherein the disengaging means performs a disengaging operation when the operating member is moved halfway in an operating direction, and the unlock means performs an unlock operation when the operating member is moved further.
